# EUROPEAN PATENT SPECIFICATION

(11) **EP 0 560 963 B1**
(45) Date of publication and mention of the grant of the patent: **20.03.1996**
(21) Application number: 92920621.7
(22) Date of filing: 30.09.1992
(51) Int. Cl.: F16L 29/02, F16L 39/00

(54) **GAS COUPLING APPARATUS**
KUPPLUNGSVORRICHTUNG FÜR GAS
DISPOSITIF DE RACCORDEMENT DE GAZ

(30) Priority: 04.10.1991 GB 9121141
(43) Date of publication of application: 22.09.1993
(73) Proprietor: SAGE-PASSANT, Peter, Houghton Regis, Beds LU5 5BG (GB)
(72) Inventor: SAGE-PASSANT, Peter, Houghton Regis, Beds LU5 5BG (GB)
(74) Representative: Gregory, Timothy Mark
(86) International application number: GB9201792
(87) International publication number: WO9307415

(56) References cited:
- FR-A- 2 129 768
- GB-A- 1 514 689
- GB-A- 2 230 070
- US-A- 4 105 046

## Description

This invention relates to apparatus for coupling a gas flow line and a unit of gas fed catering equipment. Such equipment may be a gas cooker oven, ranges, fryers, bratt pans etcetera.

Commercial catering establishments are subject to stringent health and hygiene requirements. Ease of access for cleaning purposes is a major consideration in the design of kitchens and catering equipment. It is increasingly common for units to be mobile, thereby allowing staff full access to clean both the equipment itself and the underlying floor area. However, not all catering equipment is readily made mobile. Ovens or hobs, for example, necessarily require connection to a gas feed, and it is this connection which has hitherto limited such units to static fixtures. Unfortunately, it is around these very fixtures that a large proportion of food handling is done, and thus it is essential that they, and the area around them, can be adequately cleaned. Flexible links between the service supply ports and the unit have been suggested, but these are cumbersome to accommodate when the unit is in place, prone to leakage and themselves pose not inconsiderable cleaning difficulties. It is a combination of these problems that makes the use of flexible links at least unattractive, and often unacceptable.

It is known from application number GB9102466.1 to provide an uncouplable coupling unit for connecting water supplies to and the waste from a sink unit.

However it has been considered that such a coupling system would not be suitable for use with a gas supply.

It is an object of the present invention to overcome, or at least reduce, the problems of cleaning and cleaning around catering equipment requiring gas service connections.

According to the present invention, there is provided a unit of gas fed catering equipment adapted for coupling releasably to a source of gas provided at a wall in the form of a wall-mountable connector extending away from the wall and connected to said gas source, the unit comprising a moveable base affixable to or integral with the gas fed unit, a connector attached to said base and in gas communication with an inlet of the unit, said wall connector and said base connector being interengagable, closure means for each connector to maintain each sealingly closed when they are not interenagaged, locking means to hold them releasably in interengaged condition, and additional seal means to surround the connectors and locking means when engaged.

The unit may have additional latching means adapted to hold the unit to the wall.

Preferably the catering unit has an operating lever to operate the locking means.

An embodiment of the present invention will now be more particularly described, by way of example, and with reference to the accompanying drawings, in which:-
Figure 1 is a plan view of a unit such as may be used in the apparatus of the present invention; and

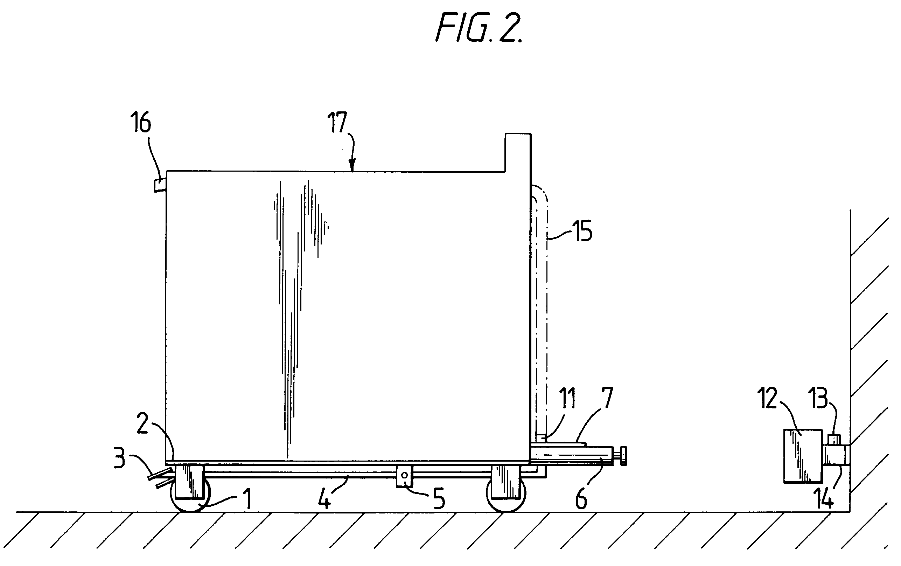

Figure 2 is a side elevation view of the unit of the first embodiment of the invention.

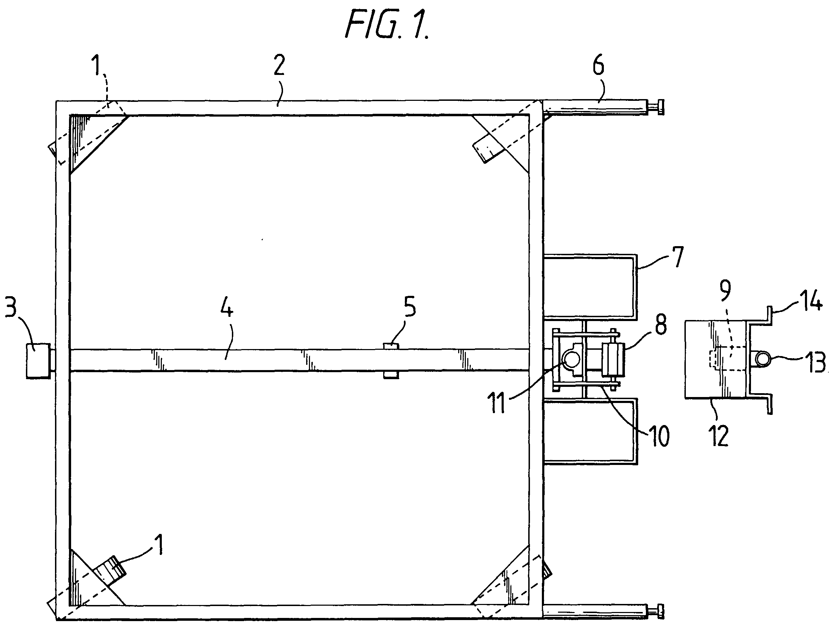

Referring now to Figure 1, a base frame 2 is mounted to a castor 1 at each corner so that it is moveable. A gas fed unit 17 stands on the base frame 2 to be moveable therewith. If so desired, the unit could be provided with an integral base frame and associated castors or wheels. Adjustable buffers 6 are provided to space the unit from the wall.

A gas inlet of the unit is connected by pipe 15 to a connection point 11 joined to a female connector 8, which is sealingly closed when the unit is not engaged.

The female connector 8 is surrounded by a locking collar which is connected for movement to a lever mechanism 10. This is actuated by means of a foot pedal 3 connected to it by a bar 4 pivoted about point 5. When the collar is retracted by depression of the foot pedal 3, the connector is ready to be disengaged.

A wall connector has a male fitting 9 which again is normally sealed closed. It is connected to a gas connection point 13 for eventual connection to a gas mains. It is interengagable with the female connector 8 when the collar is retracted and they are sealingly locked together when the collar is advanced.

The male connector 9 is held to the wall by bracket 14 and almost surrounded by a coupling shroud 12.

When the unit is engaged, the shroud 12 is located within guide 17 on the base, and the sealed closures of each connector 8 and 9 are opened to permit flow of gas between them.

A second latch mechanism (not shown) may be provided for greater security and safety. Before the unit can be separated from the wall fitting, the second latch must be disconnected.

## Claims

1. A unit of gas fed catering equipment (17) adapted for coupling releasably to a source of gas provided at a wall in the form of a wall-mountable connector (9) extending away from the wall and connected to said gas source (13), the unit comprising a movable base affixable to or integral with the gas fed unit, a connector (8) attached to said base and in gas communication with an inlet of the unit, said wall connector (9) and said base connector (8) being interengagable, closure means for each connector to maintain each sealingly closed when they are not interengaged, and locking means to hold them releasably in interengaged condition, and additional seal means to surround the connectors and locking means when engaged.

2. A unit as claimed in claim 1, characterised in that it is provided with additional latching means adapted to locate the unit (17) or base to the wall.

3. A unit as claimed in either claim 1 or claim 2, characterised in that the gas fed catering unit is provided with an operating lever (10) to operate the locking means.

## Patentansprüche

1. Einheit eines gasgespeisten Speisen-Zubereitungs-bzw. Cateringgeräts (17), die für trennbare Kopplung mit einer Gasversorgung ausgelegt ist, welche an einer Wand in Form eines von der Wand abstehenden und mit der Gasversorgung (13) verbundenen, wandmontierbaren Verbinders (9) vorgesehen ist, welche Einheit umfaßt: eine(n) an der Gasversorgung anbringbare (n) oder mit dieser integrierte(n), bewegliche(n) Basis oder Grundrahmen, einen am Grundrahmen angebrachten und in Gasverbindung mit einem Einlaß der Einheit stehenden Verbinder (8), wobei der Wandverbinder (9) und der Grundrahmenverbinder (8) miteinander in Eingriff bringbar bzw. koppelbar sind, Verschlußmittel für jeden Verbinder, um die Verbinder, wenn sie nicht miteinander gekoppelt sind, dicht verschlossen zu halten, und Verriegelungsmittel, um die Verbinder trennbar in miteinander gekoppeltem Zustand zu halten, sowie ein zusätzliches Dicht- bzw. Abschirmmittel, welches die Verbinder und die Verriegelungsmittel umschließt, wenn diese gekoppelt sind.

2. Einheit nach Anspruch 1, dadurch gekennzeichnet, daß sie mit zusätzlichen Verriegelungsmitteln versehen ist, mit denen die Einheit (17) oder der Grundrahmen an der Wand festlegbar ist.

3. Einheit nach Anspruch 1 oder 2, dadurch gekennzeichnet, daß die gasgespeiste Zubereitungs- bzw. Cateringgeräte-Einheit mit einem Betätigungshebel (10) zum Betätigen der Verriegelungsmittel versehen ist.

## Revendications

1. Unité d'équipement de restauration (17) alimentée en gaz adaptée pour raccorder de façon démontable à une source de gaz prévue dans un mur sous la forme d'un raccord mural (9), qui fait saillie sur le mur et qui est raccordé à ladite source de gaz (13), l'unité comprenant une base mobile pouvant être fixée à l'unité alimentée en gaz, ou intégrée à cette unité, un raccord (8) attaché à ladite base et en communication pour le passage du gaz avec une entrée de l'unité, ledit raccord mural (9) et ledit raccord de base (8) pouvant être accouplés l'un à l'autre, des moyens de fermeture prévus pour chaque raccord, servant à maintenir chacun de ces raccords hermétiquement fermé lorsque les raccords ne sont pas accouplés, des moyens d'enclenchement servant à les maintenir à l'état accouplé de façon démontable, et des moyens d'étanchéité additionnels pour entourer les raccords et les moyens d'enclenchement lorsqu'ils sont accouplés.

2. Unité selon la revendication 1, caractérisée en ce qu'elle est équipée de moyens de verrouillage additionnels adaptés pour fixer la position de l'unité (17) ou de la base contre le mur.

3. Unité selon une quelconque des revendications 1 et 2, caractérisée en ce que l'unité de restauration alimentée en gaz est équipée d'un levier d'actionnement (10) servant à actionner les moyens de verrouillage.
